# EUROPEAN PATENT SPECIFICATION

(11) **EP 0 750 981 B1**
(45) Date of publication and mention of the grant of the patent: **20.06.2001**
(21) Application number: 96303010.1
(22) Date of filing: 30.04.1996
(51) Int. Cl.: B29D 11/00, B29C 37/00, B29C 33/26

(54) **Laser demolding apparatus and method**
Verfahren und Vorrichtung zur Laser-Entformung
Procédé et dispositif pour démoulage par laser

(30) Priority: 01.05.1995 US 431552
(43) Date of publication of application: 02.01.1997
(73) Proprietor: JOHNSON & JOHNSON VISION PRODUCTS, INC., Jacksonville, Florida 32216-0995 (US)
(72) Inventor: Walker, Craig William, Jacksonville, Florida 32224 (US); Beaton, Stephen Robert, Neptune Beach, Florida 32266 (US); Martin, Wallace Anthony, Orange Park, Florida 32065 (US); Pegram, Stephen Craig, Gainesville FL 32608-4160 (US); Ross, Denwood F., Green Cove Springs, Florida 32043 (US); Dagobert, Henri Armand, Jacksonvillle, Florida 32217 (US); Kindt-Larsen, Ture, 2840 Holte (DK)
(74) Representative: Mercer, Christopher Paul

(56) References cited:
- EP-A- 0 227 365
- EP-A- 0 588 660
- FR-A- 2 662 969
- GB-A- 1 137 007
- GB-A- 2 127 345
- US-A- 3 624 672
- US-A- 4 889 664

## Description

### BACKGROUND OF THE INVENTION

### 1. Field of the Invention

The present invention relates generally to a laser demolding apparatus and method, wherein a molded assembly, comprising a front curve, a spaced back curve and a molded contact lens formed therebetween, are separated or demolded in a manner which improves the efficiency of the demolding operation.

More particularly, the subject invention pertains generally to methods and apparatus for producing ophthalmic lenses, and in particular to a method and apparatus for the improved removal of molded ophthalmic lenses from the molds in which they are produced. In particular, this invention is suited to molded ophthalmic lenses such as hydrogen contact lenses, although the method is also applicable to other small, high-precision ophthalmic lenses such as intraocular lenses.

The present invention is related to EP-A- (claiming priority from USSN 08/207 443).

### 2. Discussion of the Prior Art

As the ophthalmic lens industry has grown, and in particular the industry related to supplying contact lenses that are provided for periodic frequent replacement, the number of contact lenses that need to be produced has increased dramatically. This has required manufacturers to strive for automated methods and apparatus which are adaptable to automated practices and consistent performance.

It is known in the art to make ophthalmic lenses, such as soft contact lenses, by forming a monomer or monomer mixture in a mold such as one made from polystyrene or polypropylene.

Examples of this prior art can be found in U.S. Patents 5,039,459, 4,889,664 and 4,565,348. These patents discuss therein the requirement for a polystyrene mold in which the materials, chemistry and processes are controlled such that the mold portions do not require undue force to separate by sticking to the lens or to each other. In contrast to the above polystyrene molds, another example is the use of polypropylene or polyethylene molds such as described in U.S. Patent 4,121,896.

The mold assembly to mold an ophthalmic contact lens typically includes a lower concave mold portion (referred to as a front curve), and an upper convex mold portion (referred to as a back curve). The concave surface of the lower front curve and the convex surface of the upper back curve define therebetween a mold cavity for a contact lens. A particular problem in the prior art is that the front and back mold portions are usually surrounded by a flange, and the monomer or monomer mixture is supplied in excess to the concave mold portion prior to the assembly of the molds. After the mold portions are placed together, defining the lens and forming an edge, the excess monomer or monomer mixture is expelled from the mold cavity and rests on or between the flange of one or both mold portions. Upon polymerization, this excess material forms an annular flange or ring around the formed lens which resists separation of the mold portions during a demolding operation.

The prior art process for separating the mold portions and removing the lens consists of preheating, heating, prying and removal. Hot air provides convective heating, mechanical leverage the prying, and the removal is manual. Heating the mold by convection is not an efficient heat transfer technique, and in the prior art, from the time a mold enters the heating apparatus until the back mold portion is completely removed requires on the order of one minute.

The prior art method for removing the lens is to apply heat to the back mold portion by a heated air stream. The heated air stream is directed against the exterior of the back mold portion where it transfers heat to the upper surface of the lens. Heat is then transported by thermal conduction through the back mold, the molded lens, and the front mold. The heating of the back mold portion is performed in two sequential steps, a preheat stage and a heat/pry stage. In the heat/pry stage the mold is clamped in place, and pry fingers are inserted under the back mold portion. A force is then applied to each back mold portion by the pry fingers during a heating cycle.

When the required temperature has been reached, the back mold portion breaks free and one end thereof is lifted by the pry fingers. After the back mold portion has been detached from the front mold portion on at least one side, the mold exits the heater. The back mold portion and annular flashing are then totally removed.

While the aforementioned method has some efficacy in assisting in the removal of the lens from between the mold portions, the temperature gradient achieved from the heated back mold portion, across the lens to the front mold portion is relatively small. The shortcomings in this approach result from the manner in which heat is delivered to the mold portion. The constant temperature air stream heats the exterior surface of the back mold portion, while thermal conduction transfers heat to the lens surface. The only way to increase the thermal gradient is to transfer heat faster, but this would cause the back mold portion to become too soft for the lift fingers to engage.

This prior art method has not been entirely satisfactory because the induced thermal gradient is not sufficient to fully and repeatedly separate the mold portions.

In the technical approach taken in EP-A-0 686 485, during each demolding operation the separating fixture is rotated about an axis which is quite close to the restraining member to result in a relative rotational pry movement of the back curve relative to the front curve to progressively separate and peel the back curve from the front curve. This rotational demolding operation requires that the curve to pry finger entry clearance, and also the position of the rotational pivot point, be very precisely controlled in order to prevent point contact loading of the demolding forces on the back curve. Point contact loading of the demolding forces leads to back curve breakage and down time of the assembly line. Since the preciseness of the rotational demolding set-up is hard to obtain and even harder to maintain, increased laser heat and slower demold speeds are generally required to prevent back curve breakage. Another fault with a poor rotational demolding set-up is the resultant damage to the lens if the back curve rotates around the edge of the lens.

EP-A-0588660 discloses an apparatus and method for laser assisted demolding of ophthalmic lenses wherein a laser is used to induce a shear force which breaks the lens/mold adhesion. The mold portions are separated by means of the rotational movement of pry fingers engaging one of the portions.

### SUMMARY OF THE INVENTION

Accordingly, it is a primary object of the present invention to provide an improved laser demolding apparatus and method that can easily and repeatedly separate contact lens mold portions without damaging the contact lens formed therebetween.

A further object of the subject invention is the provision of a method and apparatus for separating a back curve mold from a front curve mold of a contact lens mold assembly wherein a substantial temperature gradient is applied across at least one of the mold portions. In a preferred embodiment, a substantial temperature gradient is created between the back curve mold and a contact lens formed in a cavity between the two mold portions.

Another object of the present invention is to provide an automated apparatus to mechanically and reliably pry the mold halves apart in a consistent and reliable manner to thereby enhance the production of defect-free contact lenses, and minimize tearing of the lens and breakage of the lens mold parts.

A further object of the subject invention to perform such separation without excessive environmental heating or waste of energy.

In accordance with the teachings herein, the present invention provides an arrangement for demolding a mold assembly, which includes a first front mold portion having a central mold section with a surrounding flange, and a corresponding second back mold portion also having a central mold section with a surrounding flange. In a preferred embodiment, the first mold portion is a concave front curve mold half, and the second mold portion is a convex back curve mold half, with a contact lens being molded between the first and second mold halves. The flanges of the front and back mold portions are spaced apart and parallel to each other. The demolding apparatus includes restraining means for restraining the first mold portion of the mold assembly, which includes restraining fingers positioned between and on opposite sides of the spaced flanges of the first and second mold portions and against the flange of the first mold portion. The demolding apparatus also includes a separating fixture which includes separating fingers positioned between and on opposite sides of the spaced flanges of the first and second mold portions and against the flange of the second mold portion. During demolding, the separating fixture is subjected to a substantially vertical prying motion relative to the restraining means to separate the second mold portion from the first mold portion.

The previous rotational laser demolding arrangement, as described in parent application Serial No. 08/257,801, was converted from an IKO rack and pinion stepper motor drive with a rotational pry demolding arrangement to an IKO rack and pinion stepper motor drive with a vertical lift pry demolding arrangement in less than two hours. The relatively simple conversion entailed replacing the pry pivot link arm, and locking the pry finger horizontally to the back curve. The pry pivot link arm was replaced with an L-shaped link with an inserted cam-follower type bearing. The L-shaped link pivots around the previous demolding pivot point, causing the wedge pivot platform to rotate about its pivot point. The pivot point for the wedge pivot platform is a rotational shaft which is a substantial radial distance from the pry finger (at least the length of the wedge pivot platform), so that the pry action is a substantially vertical pry motion.

The advantages of the vertical pry demolding arrangement are:
a. no point loading of back curves, leading to lower laser heats, faster demolding speeds, and less down time caused by broken back curves;
b. exceptional pilot line data from a steam demolding arrangement using a vertical lift demolding pry motion. A laser demold audit of 672 consecutive lenses had two hema rings, two edge defects, and one missing lens (<1%);
c. a much shorter drive distance for the IKO rack and pinion stepper motor drive during demolding, reducing the demolding time significantly;
d. better hema ring removal;
e. the wedge lift pneumatic drive cylinder can be speeded up since hema ring removal is completed by the IKO rack and pinion stepper motor drive. In contrast thereto, with a pivotal demolding arrangement as in parent application Serial No. 08/257,801, the hema ring removal is completed by the wedge lift pneumatic drive cylinder, making the pneumatic drive cylinder a critical parameter. With a vertical lift demolding arrangement pursuant to the present invention, the wedge pneumatic drive cylinder is used only to raise the back curve to a scrape off height;
f. since the pry fingers are locked in position, scrape off can occur while the IKO rack and pinion stepper motor drive is returning to a start pry position. This allows faster movements to the scrape off position with a reduction in the cycle time; and
g. the vertical pry demolding arrangement of the present invention is easier to set up and maintain, while using an acceptable skill and experience level of personnel.

In greater detail, before demolding, the second mold portion is irradiated with electromagnetic radiation, which is absorbed thereby to cause a substantial temperature gradient between the second mold portion and the contact lens being demolded. The temperature gradient causes a differential expansion and shifting of the surface of the heated second mold portion relative to the surface of the lens to lessen the adhesion therebetween to assist in the separation of the mold portions, while leaving the lens in the first mold portion. The second mold portion is preferably irradiated by a laser producing radiation with a wavelength between 1 µm and 20 µm. The separating fingers are joined together to form a U-shaped separator, and the laser beam is directed through the U opening in the U-shaped separator to irradiate the second mold portion.

The mold assembly is carried by a pallet, which carries an array of similar mold assemblies, and a conveyor conveys the pallet into a demolding position in the demolding apparatus. The conveyor conveys the mold assembly on the pallet into the demolding apparatus, to insert the restraining fingers and the separating fingers between the flange members of the mold assembly. The restraining fingers are positioned against the flange of the first mold portion and the separating fingers are positioned against the flange of the second mold portion. The separating fixture is supported by a first movable base to impart a substantially vertical prying motion thereto relative to the fixedly mounted restraining means during the demolding operation. A control system sequentially actuates the conveyor to convey the mold assembly into a demolding position in the demolding apparatus, and then actuates a substantially vertical prying motion of the separation fixture to lift the back curve mold portion from the restrained front curve mold portion, to thereby separate the back curve mold portion from the front curve mold portion and the contact lens retained therein.

A plurality of contact lens mold assemblies are carried on a pallet, and the demolding apparatus includes a plurality of pairs of restraining means and separating fixtures. In one preferred embodiment, the pallet carries two rows of contact lens mold assemblies, and the demolding apparatus includes a first set of restraining means and separating fixtures positioned on a first side of the pallet and a second set positioned on a second side of the pallet.

The separating fixture is mounted on a first movable base for elevational movement relative to the fixedly mounted restraining means. The first movable base is pivotally mounted at one end about a rotational shaft, and the separating fixture is mounted at the second, opposite end of the first movable base. With this arrangement, the separating fixture is spaced from the rotational shaft of the first movable base by at least the full length of the first base such that rotational movement thereof results in a substantially vertical prying motion of the separating fixture relative to the restraining means. The arrangement further includes a ramp cam driven by a pneumatic motor. The first movable base includes a cam follower roller positioned on the ramp cam, such that as the ramp cam is driven by the pneumatic motor, the cam follower roller rotates the first movable base about the rotational shaft to raise and lower the separating fixture. The first movable base is mounted on a second movable base which is mounted for both X and Y translational movements relative to a fixed base. An X pneumatic drive motor drives the second movable base in X translational movement, and a Y pneumatic drive motor drives the second movable base in Y translational movement relative to the fixed base.

The separating fixture includes a gripping means for gripping a second mold portion which is separated from a first mold portion. A back curve mold remover is provided to remove the back curve mold portion from the separating fixture after separation of the mold portions. The separating fixture is translated relative to the back curve remover, during which translation the back curve mold portion is removed from the separating fixture. The back curve remover is vertically movable into and out of a back curve removal position relative to the separating fixture.

The present invention also provides a method for demolding a mold assembly, which includes a first front mold portion having a central mold section with a surrounding flange, and a corresponding second back mold portion having a central mold section with a surrounding flange. A molded ophthalmic lens is formed between the front and back mold portions, and the flanges of the front and back mold portions are spaced apart and parallel to each other. The method comprises restraining the first mold portion of the mold assembly by restraining fingers which are positioned between and on opposite sides of the spaced flanges of the first and second mold portions and against the flange of the first mold portion. Separating fingers are positioned between and on opposite sides of the spaced flanges of the first and second mold portions and against the flange of the second mold portion. The separating fingers are subjected to a substantially vertical prying motion relative to the restrained first mold portion to separate the second mold portion from the first mold portion.

In a preferred embodiment of the method, the second mold portion is irradiated with electromagnetic radiation, which is absorbed thereby to cause a substantial temperature gradient between the second mold portion and the contact lens being demolded. The temperature gradient causes a differential expansion and shifting of the surface of the heated second mold portion relative to the surface of the lens, lessening the adhesion between the lens and the second mold portion to assist in the separation of the mold portions, while leaving the lens in the first mold portion. The second mold portion is preferably irradiated by a laser producing radiation with a wavelength between 1 µm and 20 µm. A laser beam is directed through the separating fingers to irradiate the second mold portion.

Pursuant to the method, the mold assembly is carried by a pallet, which carries an array of similar mold assemblies, and the pallet is conveyed into a position wherein the restraining fingers and separating fingers are positioned between the spaced flanges of the first and second mold portions, with the restraining fingers against the flange of the first mold portion and the separating fingers against the flange of the second mold portion. During the demolding operation, the separating fingers are subjected to a substantially vertical prying motion. The separating fingers grip a second mold portion which is separated from a first mold portion. The back curve mold portion is removed from the separating fingers after separation of the mold portions. The mold assembly is conveyed to insert the restraining fingers and separating fingers between the flange members of the mold assembly, and then the separating fingers are subjected to a substantially vertical prying motion to lift the back curve mold portion relative to the front curve mold, thereby separating the back curve mold portion from the front curve mold portion and the contact lens retained therein. A plurality of mold assemblies are carried on the pallet in two rows, and a first set of restraining fingers and separating fingers are positioned on a first side of the pallet, and a second set of restraining fingers and separating fingers are positioned on a second side of the pallet.

### BRIEF DESCRIPTION OF THE DRAWINGS

The foregoing objects and advantages of the present invention for a laser demolding apparatus and method may be more readily understood by one skilled in the art with reference being had to the following detailed description of several preferred embodiments thereof, taken in conjunction with the accompanying drawings wherein like elements are designated by identical reference numerals throughout the several views, and in which:
Figure 1 illustrates a front elevational view of a pallet which holds therein a two by four array of contact lens mold assemblies, each of which consists of a lower front curve mold and an upper back curve mold, defining therebetween a mold cavity for a contact lens;
Figure 2 is an enlarged side elevational and sectional view of a contact lens mold assembly, illustrating details of construction of a lower front curve mold and an upper back curve mold;
Figure 3 illustrates a sequence of movements of a separating finger member, mounted on an articulated separating arm, relative to a pallet supporting thereon an array of front and back curve assemblies;
Figure 4 is a view of a fixture apparatus for separating mold portions according to one aspect of the present invention;
Figure 5 is a front elevational view of one embodiment of a demolding apparatus pursuant to the present invention;
Figure 6 is a top plan view of the demolding apparatus taken along arrows 6-6 in Figure 5;
Figure 7 is a right side elevational view of the demolding apparatus taken along arrows 7-7 in Figure 5;
Figure 8 is a top plan view similar to Figure 5, illustrating the demolding apparatus positioned adjacent to a conveyor system for the sequential movement of pallets containing contact lens mold assemblies through the demolding apparatus;
Figure 9 is a top planar view of the front curve retaining means used in the laser demolding embodiment of the present invention;
Figure 10 is a partially cross-sectional view of a portion of the laser demolding embodiment of Figure 9, further illustrating the front curve retaining guides;
Figure 11 illustrates a side elevational view of a back curve scraper for removing the back curves and depositing them into a receptacle;
Figure 12 is a schematic illustration of the movements of the previous demolding apparatus of EP-A-0 686 485, showing the previous rotational demolding action; and
Figure 13 is a schematic illustration of the movements of the demolding apparatus pursuant to the present continuation-in-part application, showing the present substantially vertical demolding action thereof.

### DETAILED DESCRIPTION OF THE DRAWINGS

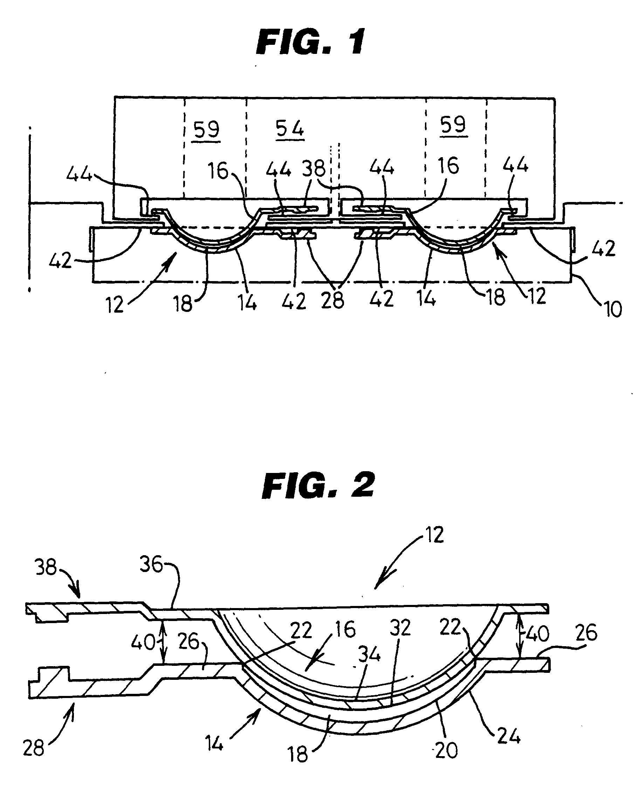

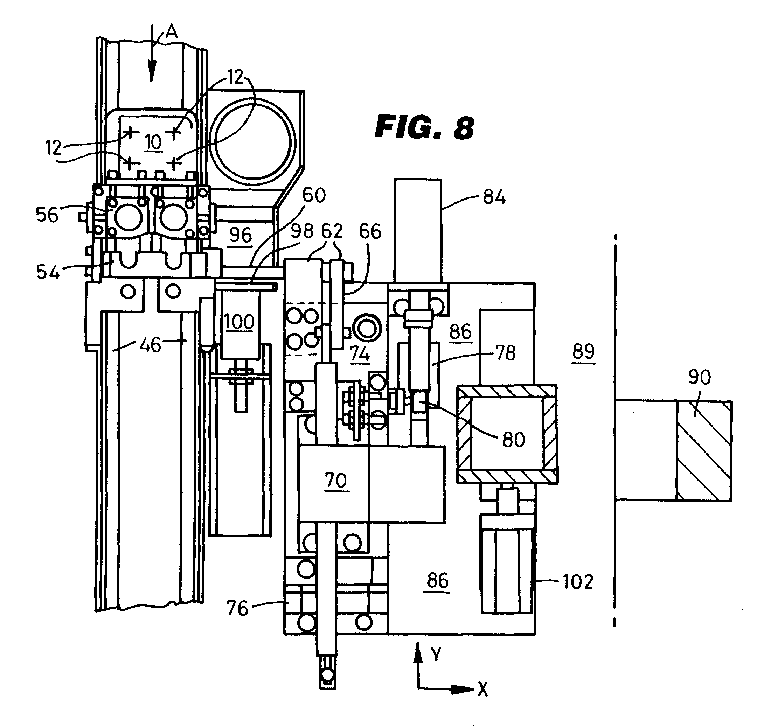

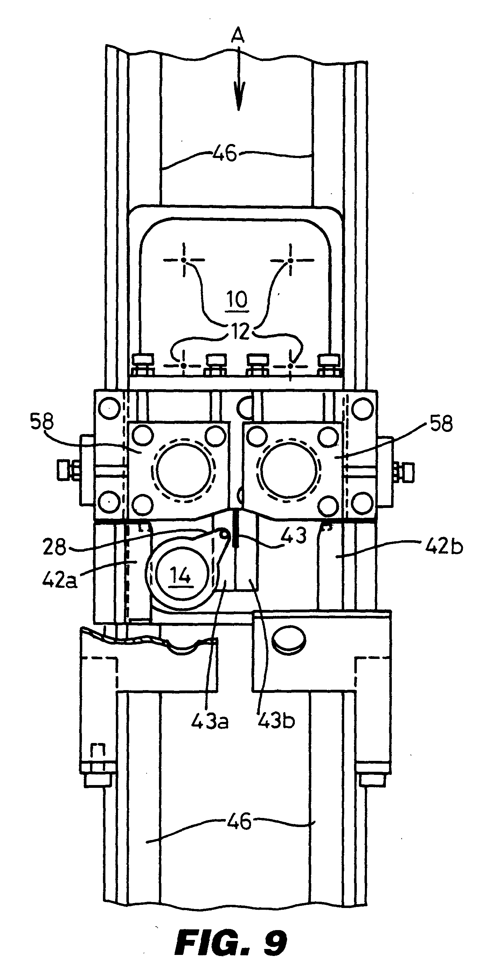

Referring to the drawings in detail, Figure 1 illustrates a front elevational view of a pallet 10 which holds thereon an array, typically a two by four array, of contact lens mold assemblies 12, as illustrated in further detail in Figures 8 and 9 wherein each mold assembly is illustrated schematically by a +.

In the laser demolding apparatus, pallets 10 containing contact lens mold assemblies are advanced sequentially in the direction of arrow A, Figures 8 and 9, by a conveyor system into and then through the laser demolding apparatus. The pallets 10 are advanced by push blocks on the conveyor system, and are initially incrementally advanced to advance an entire pallet length, and are then incrementally advanced a smaller distance equal to the distance between centers of pairs of mold assemblies carried on the pallet 10. This enables the laser demolding apparatus to demold a pair of mold assemblies after each advance between pairs, and when the last pair is demolded, a new pallet is then advanced into an initial position in the demolding apparatus, as illustrated in Figure 8.

Figure 2 is a side elevational and sectional view of one contact lens mold assembly 12 which consists of a lower front curve mold 14 and an upper back curve mold 16, defining therebetween a mold cavity 18 for a contact lens.

The front and back mold halves 14 and 16 are preferably formed of polystyrene but could be any suitable thermoplastic polymer which is sufficiently transparent to ultraviolet light to allow irradiation therethrough with light to promote the subsequent polymerization of a soft contact lens. A suitable thermoplastic such as polystyrene also has other desirable qualities such as being moldable to surfaces of optical quality at relatively low temperatures, having excellent flow characteristics and remaining amorphous during molding, not crystallizing, and have minimal shrinkage during cooling.

The front mold half 14 defines a central curved section with an optical quality concave surface 20, which has a circular circumferential knife edge 22 extending therearound. The knife edge 22 is desirable to form a sharp and uniform plastic radius parting line (edge) for the subsequently molded soft contact lens. A generally parallel convex surface 24 is spaced from the concave surface 20, and an annular essentially uniplanar flange 26 is formed extending radially outwardly from the surfaces 20 and 24. The concave surface 20 has the dimensions of the front curve (power curve) of a contact lens to be produced by the mold assembly, and is sufficiently smooth such that the surface of a contact lens formed by polymerization of a polymerizable composition in contact with the surface is of optically acceptable quality. The front mold half is designed with a thinness, typically 0.8 mm, and rigidity effective to transmit heat therethrough rapidly and to withstand prying forces applied to separate the mold half from the mold assembly during a demolding operation. The front mold half 14 further defines a generally triangular tab 28, Figures 2 and 9, integral with the flange 26 which projects from one side of the flange. Tab 28 is essentially uniplanar and extends to an injection hot tip which supplies molten thermoplastic to form the front mold half.

The back mold half 16 defines a central curved section with an optical quality convex surface 32, a generally parallel concave surface 34 spaced from the convex surface 32, and an annular essentially uniplanar flange 36 formed extending radially outwardly from the surfaces 32 and 34. The convex surface 32 has the dimensions of the rear curve (which rests upon the cornea of the eye) of a contact lens to be produced by the back mold half, and is sufficiently smooth such that the surface of a contact lens formed by polymerization of a polymerizable composition in contact with the surface is of optically acceptable quality. The back mold half is designed with a thinness, typically 0.6 mm, and rigidity effective to transmit heat therethrough rapidly and to withstand prying forces applied to separate the mold half from the mold assembly during demolding. The back mold half 16 also defines a generally triangular tab 38, similar to the triangular tab 28, integral with the flange which projects from one side of the flange. The tab 38 extends to an injection hot tip which supplies molten thermoplastic to form the back mold half.

The flanges 26 and 36 are designed to assist in demolding and part handling, and also protect the optical surfaces and the knife edge. The geometry of the triangular tabs 28 and 38 serves an additional function in straightening and orienting the assembled front curve/back curve assembly 12 prior to demolding. When a front mold half or curve 14 is assembled with a back mold half or curve 16, a gap 40 is formed between the two spaced flanges and projecting tabs which is important for demolding. The gap between the tabs is preferably in the range of 1.5 mm-3.0 mm, and is required to assist in the demolding operation, as explained in greater detail hereinbelow.

Referring to Figures 1 and 2, the contact lens mold assemblies 12 are supported in the pallet 10 with the annular flanges 26 and tabs 28 of the front curve mold 14 recessed slightly below the upper surface of the pallet 10. The annular flanges 36 and tabs 38 of the back curve mold 16 are raised above the upper surface of the pallet, to allow retaining fingers 42 and lifting or prying fingers 44 to slide between the spaced flanges 26, 36 of the front and back curves. The retaining fingers 42 are positioned above opposite sides of the flange 26 around the front curve 14 to restrain the front curve 14 in the pallet and against upward movement. The lifting fingers 44 are positioned below opposite sides of the flange 36 around the back curve 16 to lift and pry the back curve from the restrained front curve.

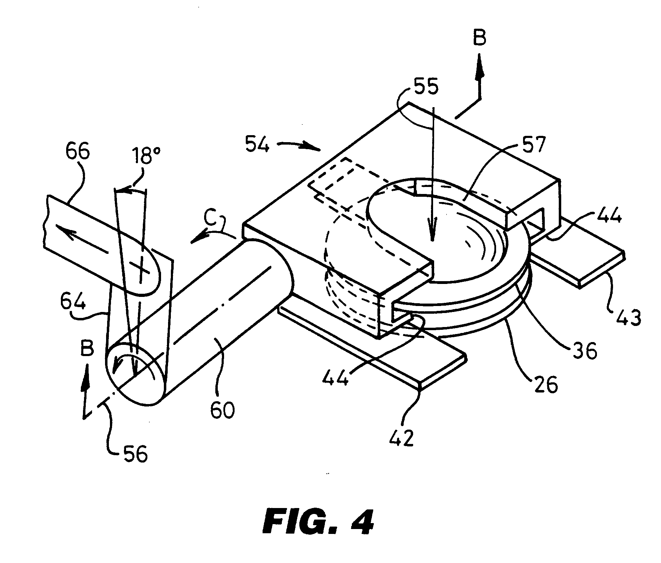

Referring to Figure 4, the thin metal pry fingers 44, which are shown positioned underneath the back mold portion flange 36, are machined flat on both sides. The pry fixture 54 rotates about axis 56 so that after exposure of the rear mold portion 16 to the laser, the pry fingers 44 pry the back mold portion up. Whereas it was found that merely prying off the back mold portion in an arbitrary fashion was acceptable, when the metal fingers are stopped under the flange 36, and are then tilted back, the overall quality of the removed lens was as good or better than currently employed techniques. During the demolding separation, the back curve is physically peeled from the front curve and molded contact lens therein, similar to the peeling of a strip of tape from a tape roll, such that the separation occurs sequentially in a wavefront which moves across the back and front curves as they are being separated.

The lens/mold assembly 12 is positioned in a fixture shown in Figure 4. A primary requirement of this fixture, beyond mechanical stability, is not to interfere with the beam 55 of electromagnetic radiation. The separating fingers 44 of the pry fixture 54 define a U-shaped opening above the back curve mold 16, and prior to demolding, a laser beam is directed through the U-shaped opening 57 to heat the back curve, thus creating a substantial thermal gradient across the mold assembly 12 to assist in separating the back curve from the front curve. For the presently described system, only the back mold portion 16 is heated by exposure to radiation. The back mold portion is thinner than the front mold portion 14, and allows rapid, non-destructive heating of the polystyrene sufficient to create a large thermal gradient. The thicker front mold portion containing a larger amount of polystyrene would not be heated as rapidly, and thereby not produce the same thermal gradient without localized overheating problems.

The side-by-side assemblies 12 of the front and back curves are held in the pallet 10 with the flanges 26 and tabs 28 of the front curves being in slightly recessed positions and the flanges 36 and tabs 38 of the rear curves 16 being in slightly elevated positions, such that as the pallet 10 travels on an assembly line towards the demolding apparatus, the retaining fingers 42 and separating or lifting fingers 44 readily slide between the separated side flanges 26, 36 of the front and back curves.

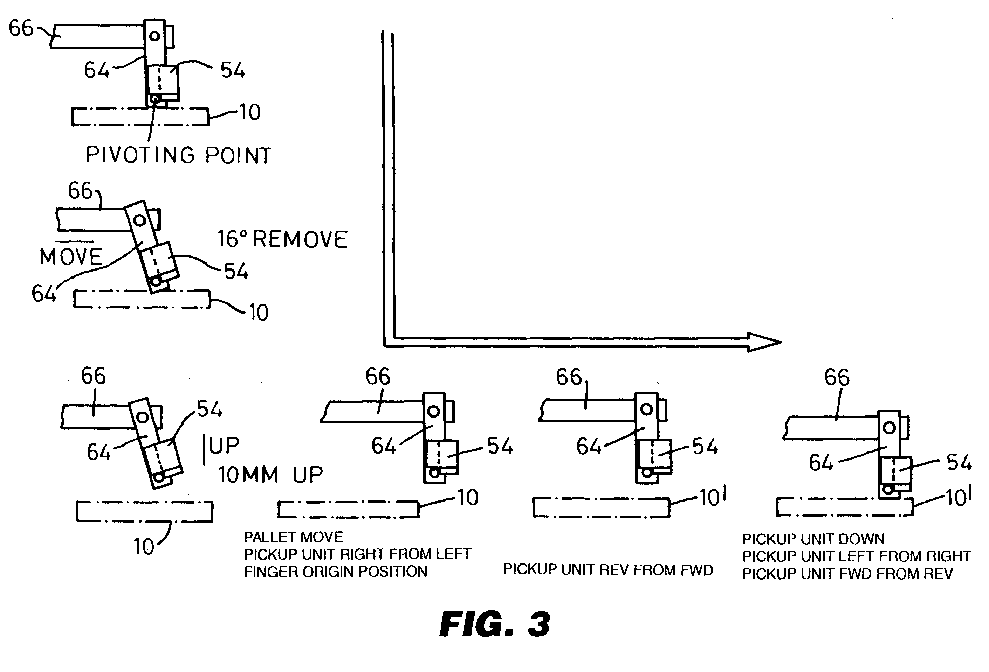

Figure 3 illustrates one sequence of movements of a pry fixture 54, rotationally mounted on a shaft 60, relative to a pallet 10 supporting a two by four array of front and back curve assemblies 12. In a first position in the upper left portion of Figure 2, the pallet 10, moving on a conveyor, moves the front and back curve assemblies 12 in the pallet into the position illustrated in Figure 1 in which retaining fingers 46 are positioned above opposite sides of the flange 26 around the front curve 14 to restrain the front curve 14 in the pallet against upward movement. Lifting fingers 48 are positioned below opposite sides of the flange 36 around the back curve mold 16 to lift and pry the back curve mold 16 from the restrained front curve mold 14. As illustrated in Figure 1, the contact lens mold assemblies 12 are supported in the pallet with the annular flanges 26 and tabs 28 of the front curve mold 14 recessed slightly below the upper surface of the pallet, and with the annular flanges 36 and tabs 38 of the back curve mold 16 raised above the upper surface of the pallet, to allow the retaining fingers 46 and lifting fingers 48 to slide between the spaced flanges 26, 38, as the conveyor moves the pallet into the position shown in Figure 1.

In the second position in the middle left portion of Figure 3, after illumination of the back curve by a laser beam, the articulated arm 64 rotates the pry fixture 54 to separate the upper back curve from the lower front curve, with the rotation causing the separating finger member to rotate to pry apart and separate the back curve from the front curve.

In the third position in the lower extreme left portion of Figure 3, the pry fixture 54 is raised upwardly approximately 10 mm from the pallet.

In the fourth position in the lower middle left portion of Figure 3, the pallet is moved to the left by the conveyor, the pry fixture is rotated back to its original position, and the pry fixture 54 is conveyed in X and Y directions, as described in further detail hereinbelow, to remove the separated back mold half from the pry fixture 54.

In the fifth position in the lower middle right portion of Figure 3, another pallet, with unseparated back and front curve assemblies, is moved by the conveyor into a position under the pry fixture, and the pry fixture 54 is conveyed back in X and Y directions into a demolding position, as described in further detail hereinbelow.

In the sixth position in the lower extreme right portion of Figure 3, the pry fixture 54 is lowered adjacent to the next pallet to reposition the pry fixture 54 relative to the next pallet 10' for the next demolding operation.

The pallet 10' is then conveyed to the left to reassume the first position, in the upper left portion of Figure 3, in which the separating fingers and retaining fingers are positioned between the spaced opposed flanges of the joined back and front curve assemblies.

The back curve lens mold 16 is heated by a laser beam to create a differential expansion of the heated mold polymer relative to the cooler lens polymer, which shifts one surface with respect to the other. The resultant shear force breaks the polymerized lens/polymer mold adhesion and assists in separation of the mold portions 14, 16. The greater the temperature gradient between the surfaces of the mold portions, the greater the shearing force and the easier the mold portions separate. This effect is greatest when there is maximum thermal gradient. As time continues, heat is lost through conduction from the back mold portion into the lens polymer and the front mold portion, and then collectively into the surrounding environment. The heated back mold portion is, therefore, promptly removed so that very little energy is transferred to the polymer lens, avoiding the possibility of thermal decomposition of the lens.

Heating the back curve is accomplished by the use of a source of electromagnetic radiation, preferably a carbon dioxide (CO₂) laser, applied to at least one of the mold portions. The laser is preferably of about 80 watts at a wavelength of 10.6 µm. The exposure of the mold portion to the laser is between one half and one second.

While a CO₂ laser producing radiation in the mid-infrared range at a wavelength of 10.6 microns was used in one embodiment, it is also possible to use a high powered UV laser or a high intensity electromagnetic radiation emitter of any type wherein the radiation produced is absorbed by the mold material sufficiently to cause an increase in mold material temperature.

In the case of lasers, both mid-infrared and UV, the laser energy is approximately 60% efficient because the polystyrene mold material is nearly 100% absorptive and only a tiny fraction of the incident radiation is reflected or scattered. In this way, little or no energy is lost to atmospheric absorption, so only the sample is heated.

Also, because of the absorptive nature of the mold material at these frequencies, most of the laser energy is absorbed within several wavelengths travel into the material. From that point, heat is transferred only by conduction from the surface. For that reason, on initial exposure to the laser beam, a substantial thermal gradient is formed between the exposed exterior surface and the surface of the mold portion in contact with the lens.

Preferably, a carbon dioxide (CO₂) laser applies radiation to at least one of the mold portions and may be split into two beams to simultaneously heat the back curve of two mold assemblies. It has been found through empirical testing that the laser is preferably of about 80 watts per mold assembly at a wavelength of 10.6 µm. The exposure time of the mold to the laser is between one half and one second. Lasers of this power range are available both in flowing gas and sealed laser types. In one embodiment of the laser demolding apparatus, a Laser Photonics model 580 cw/pulse laser was utilized.

A preferred embodiment was found by experimentation. While it has been found that a laser power output of 3 to 4 watts is sufficient to cause heating of a polystyrene mold portion so that the mold can be mechanically separated, it was determined that a much higher powered laser, up to 500 watts, is preferred. Increasing the laser power and decreasing the exposure duration was found to increase the thermal gradient and increase the ease and consistency with which the mold portions could be separated.

It was found that if a lens/mold combination were sufficiently underexposed, the separation forces would still be high. Lens damage such as tearing and mold damage such as breaking would result.

If a lens/mold combination were overexposed to the laser energy, separation of the mold portions and removal of the lens would again be difficult. Mold damage would result such as oxidizing and melting (softening), and loss of mold rigidity would frustrate mold separation. In addition, overexposure thermally degrades the lens.

After heating the back mold portion with the laser, a preferred method for removing the back mold portion from the front mold portion is to apply a relative tensile force between the mold portions. It was determined empirically that such mechanical force was best applied less than 0.3 seconds after exposure to the radiation. Although no adverse effects would be contemplated if there was less time between exposure and mechanical removal, in practical terms the time between exposure and mold separation would be between about 0.2 and about 1.5 seconds. Beyond a delay of 1.5 seconds the difficulties in mold separation and lens removal would be the same as those resulting from underexposure, as described above.

A significant quality consideration and advantage of the present invention is the consistent retention of the lens in the front mold portion when the back mold portion is laser heated and removed in accordance with the above technique.

With the optimal exposure time and appropriate demolding mechanism, the mold portions can be separated and the lens removed from the mold in approximately 5 seconds.

The above is, by way of explanation, for the preferred polystyrene mold system, and as can be readily appreciated by one skilled in the art, the radiation wavelengths, power levels, and exposure times must be appropriately adjusted according to the above considerations to achieve optimal characteristics for other lens/mold material systems.

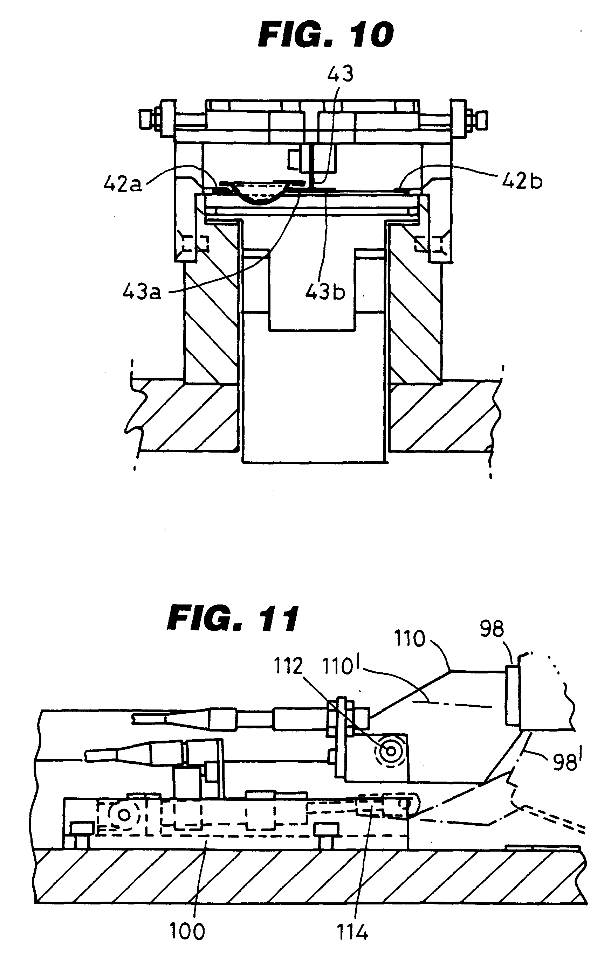

To apply a tensile force between the mold halves, the front curve mold half is held in place as illustrated in Figures 9 and 10, wherein a pair of thin metal retaining fingers 42, 43 are fixably mounted above track rails 46 and pallet 10 to secure the front curve mold half 14 in pallet 10 during the prying operation. Retaining finger 43 is an inverted T shaped member and secures one front curve mold half 14 with one flange 43a of the inverted T, and engages a second front curve mold half with a second flange 43b. The second flange 43b cooperates with a further flange 42b to secure the second front curve mold half in position.

As the pallet 10 is sequentially advanced through the laser demolding apparatus, the flanges 42-43 sequentially engage each row of mold assemblies to secure the front curve mold half. The back curve mold half flanges 36 are engaged by a pry fixture 54, diagrammatically illustrated in Figure 4, which engages both sides of flange 36 as the pallet 10 is advanced into position by the conveyor system. Pallet 10 is then stopped, and a laser beam 55 is directed through the opening 57 between the retaining fingers 42 and the prying fingers 44 against the back mold half 16. The pry fixture 54 is then rotated about axis 56 in the direction of arrow C in Figure 4 to apply a tensile force to the back curve mold half 16. The upper part of the pry fixture 54 rotates about axis 56 so that after exposure of the back curve mold portion to the laser, the fingers 44 pry the back curve mold portion up. The entire assembly is then lifted approximately 10 mm as indicated by arrows B-B in Figure 4 to remove the back curve mold part completely. It has been empirically determined that when the metal pry fingers 44 are stopped under the flange, and then tilted back approximately 18°, the overall quality of the lens removed, and the resultant yield was better than currently employed prior art pry techniques which only lift from a single side, and do not control the axis of the pivot point.

It was also empirically determined that the mechanical prying force was best supplied less than 0.3 seconds after exposure to the radiation. Although no adverse effects would be contemplated if there was less time between exposure and mechanical removal, in practical terms the time between exposure and mold separation would be between about 0.2 and about 1.5 seconds.

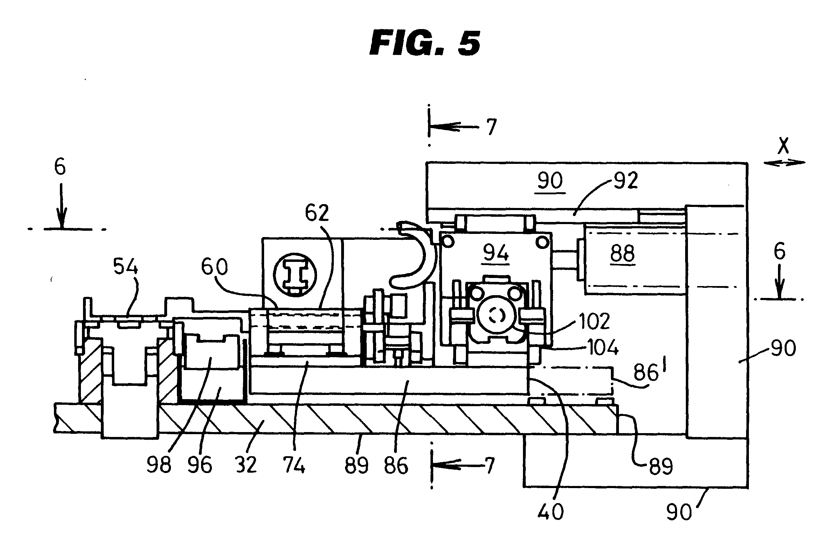

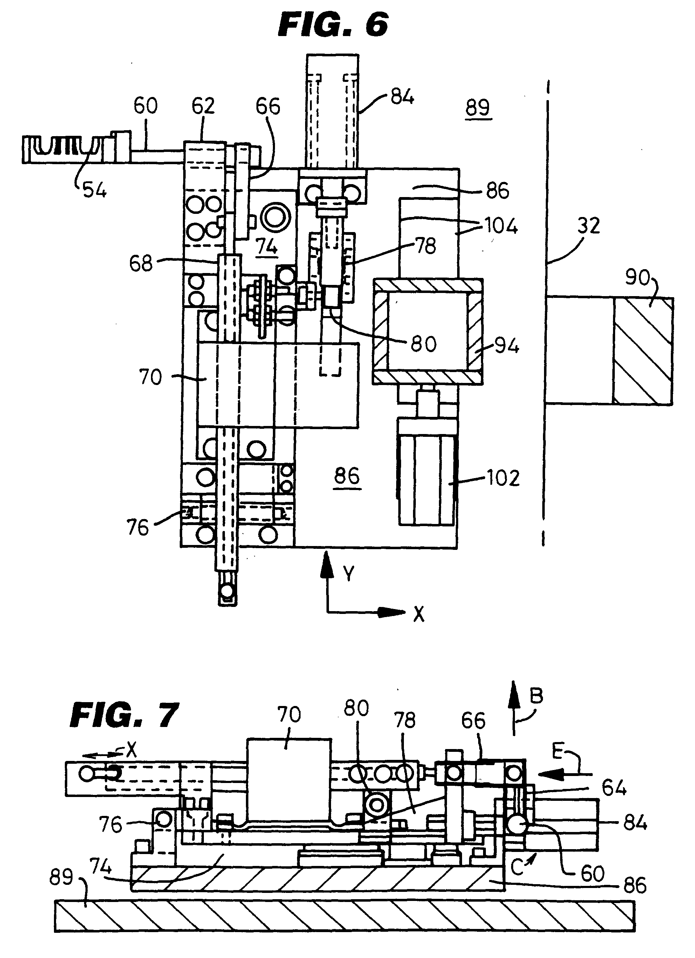

A first embodiment of the apparatus for demolding the back curve mold halves is more fully illustrated in Figures 5, 6, 7, 8, 9 and 10, wherein Figure 5 is an elevational view of the apparatus, Figure 6 is a plan view taken along section line 6-6 of Figure 5, and Figure 7 is an elevational side view taken along section 7-7 of Figure 5. Figure 8 is a top plan view similar to Figure 5, illustrating the demolding apparatus positioned adjacent to a conveyor system for the sequential movement of pallets containing contact lens mold assemblies through the demolding apparatus. Figure 9 is a top planar view of the front curve retaining elements, while Figure 10 is a partially cross-sectional view of a portion of the laser demolding embodiment of Figure 9, also illustrating the front curve retaining guide elements.

As illustrated in Figure 9, pallet 10 is on the second of a plurality of demolding cycles wherein a laser delivers intense electromagnetic energy beams 55 directed through laser masks 58 to the second row of mold assemblies in pallet 10. Simultaneously therewith, the first row of mold assemblies is being demolded by the pry fixture 54, as illustrated and described with respect to Figure 4. Pry fixture 54 is rotated by shaft 60 about axis 56 within journal bearing 62 by a pair of links 64 and 66 which are illustrated in Figures 4 and 7. As illustrated in Figure 7, link 66 is pulled in the direction of arrow E by a rack 68 which is driven by a pinion on a stepper motor 70. Stepper motor 70 thereby rotates shaft 60 in the direction indicated by the arrow C in Figures 4 and 7 through approximately 18° of arc to separate the back curve mold half 16 from the front curve mold half 14.

After the pry fixture 54 and shaft 60 have been rotated, the pry fixture 54 is lifted upwardly in the direction of arrows B, Figures 4 and 7. The pry fixture 54 is mounted at one end of a platform 74 which pivots about a shaft 76 at the second and opposite end of the platform 74 to raise and lower the pry fixture 54. The platform 74 is pivoted about shaft 76, and is driven in rotation by a slidable cam 78 which engages a roller cam follower 80 mounted on the pivotable platform 74. Slidable cam 78 is advanced by a pneumatic drive motor 84 to raise shaft 60 approximately 10 mm so that the attached pry fixture 54 may be retracted for disposal of the back curve mold halves 16 after they have been separated from the mold assembly.

Each of the aforementioned components are mounted on a further movable platform 86 which is translatable in both the X and Y directions, as shown in Figures 6 and 8, in order to dispose of the separated back curve mold halves 16, as will be described hereinafter. The demolding apparatus includes a stationary base 89, upon which is mounted a stationary tower 90, relative to which the movable platform 86 is translated in both X and Y directions. Platform 86 is suspended from the stationary tower 90 and is mounted for reciprocal movement along the X axis along an X track 92. Once the pry fixture 54 has separated the back curve mold halves 16, and the pry fixture has been lifted free of pallet 10, platform 86 is shifted to the right along the X axis, as illustrated in Figures 6 and 8, by a pneumatic X drive motor 88 to the position 86', shown in phantom in Figure 5. In the right position of the movable base, illustrated by dashed lines 86' in Figure 5, the pry fixture 54 is moved to a position adjacent to a back curve scraper 98, Figure 8, which removes the back curves from the pry fixture 54 and deposits the back curves in a receptacle 96. Platform 86 is shifted to the right in the X direction in order to place the separated back curve mold halves held by the pry fixture 54 over a disposal receptacle 96, Figures 5 and 8. Simultaneously, the back curve scraper 98 is elevated by a pneumatic motor 100 to a position parallel with, and just below, the surface of pry fixture 54.

Figure 11 illustrates the back curve scraper 98 which is secured to a pivotally mounted scraper fixture 110, which rotates about a shaft 112. The scraper fixture 110 is driven by a pneumatic motor 100 and drive shaft 114, to assume one of two positions 98, 110, or 98', 110', as illustrated in Figure 11. The position 98, 110 illustrated in Figure 11 places the back curve scraper 98 in an elevated position to remove or scrape the separated back curve molds from the pry fixture 54 as the platform 86 is shifted along the Y axis, in a downward direction as shown in Figure 8, to scrape the separated mold curves 16 from the pry fixture 54 and cause them to thereby drop into the receptacle 96. Platform 86 is shifted in the Y axis by a pneumatic motor 102 which is fixedly mounted to the platform 86 and the drive shaft of which engages vertical column 94 which extends downwardly from track 92 on stationary tower 90. Platform 86 has a Y track 104 mounted thereon, as illustrated best in Figures 5 and 6, such that the platform 86 and track 104 can translate along the Y axis relative to vertical column 94.

After removal of the separated mold curves 16 from the pry fixture 54, platform 86 is then reciprocated back along the Y axes, upwardly as illustrated in Figure 8, and then back along the X axes, to the left as illustrated in Figure 8, to its original position, as illustrated in Figures 5 and 8. The slidable cam 78 is then withdrawn by drive motor 84 and the pry fixture 54 is lowered into a demolding position above pallet 10, ready for the next demolding operation. The laser is then energized to heat the second row of mold assemblies in pallet 10, and pallet 10 is then incrementally advanced by the conveyor to place the heated second row of mold assemblies into a demold position. Pallet 10 is constrained through the demolding apparatus on the conveyor by rails 46 which prevent vertical movement and any pitch, yaw or roll of the pallet during the demolding operation.

The pneumatic drive motors 88 and 102 basically drive the movable base 86 in an L path back and forth between end stop positions, and end stop detectors are employed to sense the end positions and deactivate the motors. One leg of the L translates the pry fixture 54 in an X direction between the position illustrated in Figure 5 and the position 86' at which the pry fixture 54 is positioned adjacent to the back curve scraper 98. The second leg of the L translates the pry fixture 54 in a Y direction as illustrated in Figure 8 to translate the pry fixture 54, and the rear curve members supported thereby after demolding, by the back curve scrapers 98 which remove the rear curve members from the pry fingers 44, and the back curve members then fall into a back curve disposal receptacle 96.

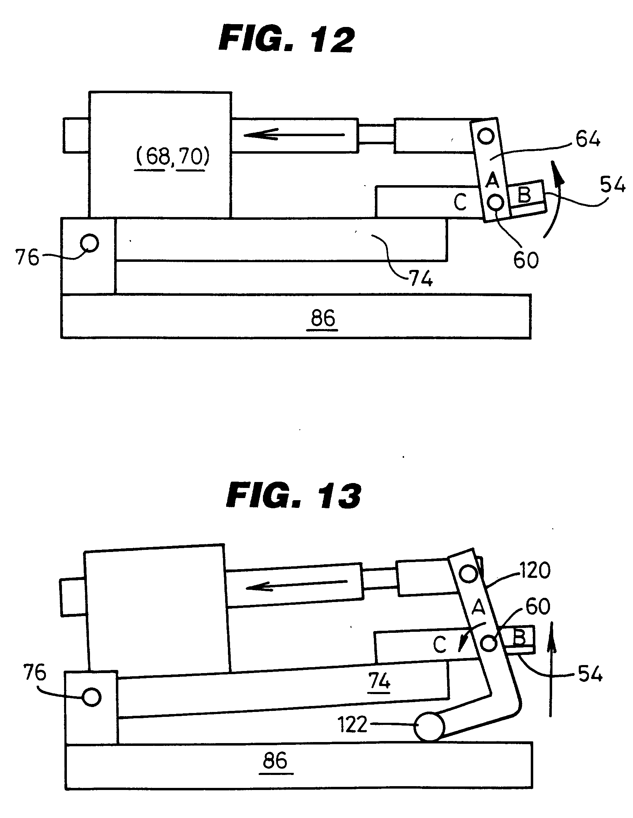

Figure 12 is a schematic illustration of the demolding movement of the previous demolding apparatus of Figures 4 through 11, as disclosed in EP-A-0 686 485, showing the previous rotational demolding action thereof. The arm 64 and the separating fixture 54 are fixed together and rotate together about shaft 60.

Figure 13 is a schematic illustration of the movements of the present demolding apparatus pursuant to the present application, showing the present vertical demolding action thereof. The previous rotational laser demolding arrangement, as described in Figures 4 through 11 in EP-A-0 686 485, was converted from an IKO rack 68 and pinion stepper motor 70 drive with a rotational pry demolding arrangement to an IKO rack 68 and pinion stepper motor 70 drive with a vertical lift pry demolding arrangement as illustrated in Figure 13 in less than two hours. The conversion entailed replacing the pry pivot link arm 64, and locking the pry finger 54 horizontally to element C and pivot platform 74. The pry pivot link arm 64 was replaced with an L-shaped link 120 with an inserted cam-follower bearing 122, which contacts and rolls on the movable base 86. The L link 120 pivots around the previous demolding pivot shaft 60, causing the wedge pivot platform 74 to rotate about its shaft 76, as illustrated in Figure 13. The pivot shaft for the wedge pivot platform 74 is a substantial radial distance (at least the length of the wedge pivot platform 74) from the pry finger 54 so that the pry action is virtually straight up. The pry fixture 54 is now fixed to mount C and pivot platform 74, and L link 120 pivots relative thereto about shaft 60.

The advantages of the vertical pry demolding arrangement of Figure 13 are a much shorter drive movement distance for the IKO rack 68 and pinion stepper motor 70 during demolding, thereby reducing the demolding time significantly. Moreover, the wedge lift pneumatic cylinder 84 can be speeded up since hema ring removal is completed at demolding. It should be noted that with a pivotal demolding arrangement as illustrated in Figure 12, the hema ring removal is completed by the wedge platform lift pneumatic drive cylinder 84, making the pneuamtic drive cylinder 84 a critical parameter. With a vertical lift demolding arrangement pursuant to the present invention as illustrated in Figure 13, the wedge platform pneumatic drive cylinder 84 is used only to raise the back curve to a scrape off height. Since the pry fingers 54 are locked in position, scrape off can occur while the IKO rack 68 and pinion stepper motor 70 drive is returning to a start of pry position. This allows faster movements to the scrape off position and a reduction in cycle time.

While several embodiments and variations of the present invention for a laser demolding apparatus and method are described in detail herein, it should be apparent that the disclosure and teachings of the present invention will suggest many alternative designs to those skilled in the art.

## Claims

1. Apparatus for demolding a mold assembly, comprising a first front mold portion (14) which has a central mold section (24) with a surrounding flange (26), and a corresponding second back mold portion (16) which has a central mold section (34) with a surrounding flange (36), with a molded ophthalmic lens being formed between the front and back mold portions (14,16), and the flanges (26,36) of the front and back mold portions (14,16) being spaced apart relative to each other, comprising:
a. restraining means (42) for restraining the first mold portion (14) of the mold assembly, including restraining fingers (42) which are positioned between and on opposite sides of the spaced flanges (26,36) of the first and second mold portions (14,16) and against the flange (26) of the first mold portion (14);
b. a separating fixture including separating fingers (44) which are positioned between and on opposite sides of the spaced flanges (26,36) of the first and second mold portions (14,16) and against the flange (36) of the second mold portion (16); and
c. means (120) for subjecting the separating fixture to a substantially vertical prying motion relative to the restraining means (42) to separate the second mold portion (16) from the first mold portion (14).

2. Apparatus as claimed in claim 1, wherein the separating fixture (54) is positioned at a first end of a pivot platform (74), which pivots about a shaft (76) at a second end of the pivot platform (74), such that the separating fixture (54) is pivoted about the pivot platform shaft (76) through a lever arm of at least the length of the pivot platform (74).

3. Apparatus as claimed in claim 2, wherein the pivot platform (74) is pivotally driven by a stepper motor (70) and rack (78) mounted on said pivot platform (74).

4. Apparatus as claimed in claim 3, wherein said pivot platform (74) is pivotally mounted on a movable base (86).

5. Apparatus as claimed in claim 4, wherein an L link (120) with a roller (122) is pivotally supported at the first end of the pivot platform (74), with the rack (78) pivotally connected to one leg of the L link (120) and the roller (122) connected to a second leg of the L link (120), with the roller (122) resting on the movable base (86).

6. A method for demolding a mold assembly, comprising a first front mold portion (14) which has a central mold section (24) with a surrounding flange (26), and a corresponding second back mold portion (16) which has a central mold section (34) with a surrounding flange (36), and having a molded ophthalmic lens formed between the front and back mold portions (14,16), and wherein the flanges (26,36) of the front and back mold portions (14,16) are spaced apart relative to each other, comprising:
a. restraining the first mold portion (14) of the mold assembly by restraining fingers (42) which are positioned between and on opposite sides of the spaced flanges (26,36) of the first and second mold portions (14,16) and against the flange (26) of the first mold portion (14);
b. positioning separating singers (54) between and on opposite sides of the spaced flanges (26,36) of the first and second mold portions (14,16) and against the flange (36) of the second mold portion (16); and
c. subjecting the separating fingers (54) to a substantially vertical prying motion relative to the restrained first mold portion (14) to separate the second mold portion (16) from the first mold portion (14).

7. A method as claimed in claim 6, including positioning the separating fingers (54) at a first end of a pivot platform (74) which pivots about a shaft (76) at a second end of the pivot platform (74), such that the separating fingers (54) are pivoted about the pivot platform shaft (76) through a lever arm of at least the length of the pivot platform (74).

8. A method as claimed in claim 7, including pivotally driving the pivot platform (74) with a stepper motor (70) and rack (78) mounted on the pivot platform (74).

9. A method as claimed in any one of claims 6 to 8, including irradiating the second mold portion with electromagnetic radiation, which is absorbed by the second mold portion (16) to cause a substantial temperature gradient between the second mold portion (16) and the contact lens being demolded, with the temperature gradient causing a differential expansion and shifting of the surface of the heated second mold portion (16) relative to the surface of the lens, lessening the adhesion between the lens and the second mold portion (16) to assist in the separation of the mold portions, while leaving the lens in the first mold portion (14).

10. A method as claimed in claim 9, wherein the irradiating step utilizes a laser producing electromagnetic radiation having a wavelength between 1 µm and 20 µm.

## Patentansprüche

1. Vorrichtung zur Entformung einer Formbaugruppe bestehend aus einer ersten vorderen Formhälfte (14) mit einem zentralen Formbereich (24) und einem diesen umgebenden Flansch (26) sowie einer entsprechenden zweiten hinteren Formhälfte (16) mit einem zentralen Formbereich (34) und einem diesen umgebenden Flansch (36) mit einer zwischen der vorderen und der hinteren Formhälfte (14, 16) geformten ophthalmischen Linse, wobei die Flansche (26, 36) der vorderen und der hinteren Formhälfte (14, 16) einen Abstand voneinander haben und die Vorrichtung umfaßt:
a) eine Rückhalte-Einrichtung (42) zum Halten der ersten Formhälfte (14) der Formbaugruppe, welche Rückhaltefinger (42) aufweist, die zwischen den im Abstand voneinander angeordneten Flanschen (26, 36) der ersten und zweiten Formhälfte (14, 16) auf einander gegenüber liegenden Seiten angeordnet und gegen den Flansch (26) der ersten Formhälfte (14) gerichtet sind;
b) eine Trenneinrichtung mit Trennfingern (44), die zwischen den im Abstand voneinander angeordneten Flanschen (26, 36) der ersten und zweiten Formhälfte (14, 16) auf einander gegenüber liegenden Seiten angeordnet und gegen den Flansch (36) der zweiten Formhälfte (16) gerichtet sind und
c) eine Einrichtung (120), um auf die Trenneinrichtung eine im wesentlichen vertikal gerichtete Trennbewegung relativ zur Rückhalte-Einrichtung (42) zu übertragen und dadurch die zweite Formhälfte (16) von der ersten Formhälfte (14) zu trennen.

2. Vorrichtung nach Anspruch 1, bei welcher die Trenneinrichtung (54) an einem ersten Ende einer Schwenkplattform (74) angeordnet ist, welche um eine Welle (76) an einem zweiten Ende der Schwenkplattform (74) schwenkt derart, daß die Trenneinrichtung (54) mittels eines Hebelarmes, der mindestens die Länge der Schwenkplattform (74) hat, um die Schwenkplattform-Welle (76) geschwenkt wird.

3. Vorrichtung nach Anspruch 2, bei welcher die Schwenkplattform (74) beim Schwenken durch einen Schrittmotor (70) und ein auf der Schwenkplattform (74) befestigtes Gestell (78) angetrieben wird.

4. Vorrichtung nach Anspruch 3, bei welcher die Schwenkplattform (74) schwenkbar auf einem beweglichen Grundkörper (86) angebracht ist.

5. Vorrichtung nach Anspruch 4, bei welcher ein L-Koppelglied (120) mit einer Rolle (122) schwenkbar am ersten Ende der Schwenkplattform (74) gelagert ist, wobei das Gestell (78) schwenkbar an einem Schenkel des L-Koppelgliedes (120) und die Rolle (122) an einem zweiten Schenkel des L-Koppelgliedes (120) angebracht ist und die Rolle (122) auf dem beweglichen Grundkörper (86) aufliegt.

6. Verfahren zur Entformung einer Formbaugruppe bestehend aus einer ersten vorderen Formhälfte (14) mit einem zentralen Formbereich (24) und einem diesen umgebenden Flansch (26) sowie einer entsprechenden zweiten hinteren Formhälfte (16) mit einem zentralen Formbereich (34) und einem diesen umgebenden Flansch (36) mit einer zwischen der vorderen und der hinteren Formhälfte (14, 16) geformten ophthalmischen Linse, wobei die Flansche (26, 36) der vorderen und der hinteren Formhälfte (14, 16) einen Abstand voneinander haben, mit den folgenden Schritten:
a) Halten der ersten Formhälfte (14) der Formbaugruppe durch Rückhaltefinger (42), die zwischen den im Abstand voneinander angeordneten Flanschen (26, 36) der ersten und zweiten Formhälfte (14, 16) auf einander gegenüber liegenden Seiten angeordnet und gegen den Flansch (26) der ersten Formhälfte (14) gerichtet sind;
b) Positionieren von Trennfingern (44), die zwischen den im Abstand voneinander angeordneten Flanschen (26, 36) der ersten und zweiten Formhälfte (14, 16) auf einander gegenüber liegenden Seiten angeordnet und gegen den Flansch (36) der zweiten Formhälfte (16) gerichtet sind und
c) Übertragen einer im wesentlichen vertikal gerichteten Trennbewegung relativ zur Rückhalte-Einrichtung (42) auf die Trenneinrichtung, um die zweite Formhälfte (16) von der ersten Formhälfte (14) zu trennen.

7. Verfahren nach Anspruch 6 mit der Anordnung der Trennfinger (44) an einem ersten Ende einer Schwenkplattform (74), welche um eine Welle (76) an einem zweiten Ende der Schwenkplattform (74) geschwenkt wird derart, daß die Trennfinger (54) mittels eines Hebelarmes, der mindestens die Länge der Schwenkplattform (74) hat, um die Schwenkplattform-Welle (76) geschwenkt werden.

8. Verfahren nach Anspruch 7 mit dem Schwenkantrieb der Schwenkplattform (74) durch einen Schrittmotor (70) und ein auf der Schwenkplattform (74) befestigtes Gestell (78).

9. Verfahren nach einem der Ansprüche 6 bis 8 mit dem Bestrahlen der zweiten Formhälfte durch elektromagnetische Strahlung, die von der zweiten Formhälfte (16) absorbiert wird, um einen beträchtlichen Temperaturgradienten zwischen der zweiten Formhälfte (16) und der zu entformenden Kontaktlinse zu erzeugen, wobei der Temperaturgradient eine unterschiedliche Dehnung und ein Verschieben der Oberfläche der erwärmten zweiten Formhälfte (16) relativ zur Oberfläche der Linse bewirkt, wodurch die Haftung zwischen der Linse und der zweiten Formhälfte (16) vermindert und die Trennung der Formhälften unterstützt wird, während die Linse in der ersten Formhälfte (14) verbleibt.

10. Verfahren nach Anspruch 9, bei welchem die Bestrahlung unter Verwendung eines Lasers erfolgt, der eine elektromagnetische Strahlung im Wellenlängenbereich zwischen 1 um und 20 um erzeugt.

## Revendications

1. Appareil de démoulage d'un ensemble de moule comprenant une première partie avant (14) de moule qui inclut une section centrale (24) de moule entourée par une bride (26) et une deuxième partie arrière correspondante (16) de moule qui inclut une partie centrale (34) de moule entourée par une bride (36), une lentille ophtalmique moulée étant formée entre les parties avant et arrière (14, 16) de moule, et les brides (26, 36) des parties avant et arrière (14, 16) de moule étant espacées l'une de l'autre, comprenant:
a. un moyen de retenue (42) pour retenir la première partie (14) de moule de l'ensemble de moule, qui inclut des doigts de retenue (42) qui sont positionnés entre des côtés opposés des brides espacées (26, 36) de la première et de la deuxième parties (14, 16) de moule et sur ces côtés opposés, et contre la bride (26) de la première partie (14) de moule;
b. une fixation de séparation qui inclut des doigts de séparation (44) qui sont positionnés entre des côtés opposés des brides espacées (26, 36) de la première et de la deuxième parties (14, 16) de moule et sur ces côtés opposés, et contre la bride (36) de la deuxième partie (16) de moule; et
c. un moyen (120) destiné à soumettre la fixation de séparation à un mouvement sensiblement vertical de détachement ou, en d'autres termes, de pince-levier par rapport au moyen de retenue (42) afin de séparer la deuxième partie (16) de moule de la première partie (14) de moule.

2. Appareil selon la revendication 1, dans lequel la fixation de séparation (54) est positionnée à une première extrémité d'une plate-forme (74) pivotante, qui pivote autour d'un arbre (76) à une deuxième extrémité de la plate-forme pivotante (74), de sorte que la fixation de séparation (54) pivote autour de l'arbre (76) de plate-forme pivotante sous l'effet d'un bras de levier au moins égal à la longueur de la plate-forme pivotante (74).

3. Appareil selon la revendication 2, dans lequel la plate-forme pivotante (74) est entraînée à pivotement par un moteur pas à pas (70) et une crémaillère (78) montés sur ladite plate-forme pivotante (74).

4. Appareil selon la revendication 3, dans lequel ladite plate-forme pivotante (74) est montée à pivotement sur une base mobile (86).

5. Appareil selon la revendication 4, dans lequel une connexion en L (120) pourvue d'un galet (122) est supportée à pivotement à la première extrémité de la plate-forme pivotante (74), la crémaillère (78) étant connectée à pivotement à l'une des branches de la connexion en L (120) et le galet (122) étant connecté à une deuxième branche de la connexion en L (120), le galet (122) reposant sur la base mobile (86).

6. Procédé de démoulage d'un ensemble de moule, qui comprend une première partie avant (14) de moule qui inclut une section centrale (24) de moule entourée par une bride (26) et une deuxième partie arrière correspondante (16) de moule qui inclut une partie centrale (34) de moule entourée par une bride (36), dans lequel une lentille ophtalmique moulée est formée entre les parties avant et arrière (14, 16) de moule, et dans lequel les brides (26, 36) des parties avant et arrière (14, 16) de moule sont espacées l'une de l'autre, comprenant les étapes consistant à:
a. retenir la première partie (14) de moule de l'ensemble de moule par des doigts de retenue (42) qui sont positionnés entre des côtés opposés des brides espacées (26, 36) de la première et de la deuxième parties (14, 16) de moule et sur ces côtés opposés, et contre la bride (26) de la première partie (14) de moule;
b. positionner des doigts de séparation (54) entre des côtés opposés des brides espacées (26, 36) de la première et de la deuxième parties (14, 16) de moule et sur ces côtés opposés, et contre la bride (36) de la deuxième partie (16) de moule; et
c. soumettre les doigts de séparation (54) à un mouvement sensiblement vertical de pince-levier par rapport à la première partie retenue (14) de moule afin de séparer la deuxième partie (16) de moule de la première partie (14) de moule.

7. Un procédé selon la revendication 6, qui inclut une étape consistant à positionner les doigts de séparation (54) à une première extrémité d'une plate-forme (74) pivotante, qui pivote autour d'un arbre (76) à une deuxième extrémité de la plate-forme pivotante (74), de sorte que les doigts de séparation (54) pivotent autour de l'arbre (76) de plate-forme pivotante sous l'effet d'un bras de levier au moins égal à la longueur de la plate-forme pivotante (74).

8. Un procédé selon la revendication 7, qui inclut l'étape consistant à entraîner la plate-forme pivotante (74) est entraînée à pivotement par un moteur pas à pas (70) et une crémaillère (78) montés sur ladite plate-forme pivotante (74).

9. Un procédé selon l'une quelconque des revendications 6 à 8, qui comprend l'étape consistant à soumettre la deuxième partie de moule à un rayonnement électromagnétique, qui est absorbé par la deuxième partie (16) de moule pour provoquer un gradient sensible de température entre la deuxième partie (16) de moule et la lentille de contact en cours de démoulage, le gradient de température provoquant une expansion différentielle et un décalage de la surface de la deuxième partie chauffée (16) de moule par rapport à la surface de la lentille, ce qui réduit l'adhérence entre la lentille et la deuxième partie (16) de moule pour aider à séparer les parties de moule, tout en laissant la lentille dans la première partie (14) de moule.

10. Un procédé selon la revendication 9, dans lequel l'étape de soumission à un rayonnement utilise un laser qui produit un rayonnement électromagnétique d'une longueur d'onde comprise entre 1 µm et 20 µm.
